# EUROPÄISCHE PATENTSCHRIFT

(11) **EP 3 575 086 B1**
(45) Veröffentlichungstag und Bekanntmachung des Hinweises auf die Patenterteilung: **26.08.2020**
(21) Anmeldenummer: 18174708.0
(22) Anmeldetag: 29.05.2018
(51) Int. Cl.: B32B 27/10, B32B 27/32, B32B 29/00

(54) **ABDECKSCHUTZFOLIE, ABDECKSCHUTZFOLIENROLLE UND HERSTELLUNGSVERFAHREN FÜR DIE ABDECKSCHUTZFOLIE**
PROTECTIVE COVER FILM, PROTECTIVE COVER FILM ROLL AND METHOD OF MANUFACTURING THE PROTECTIVE COVER FILM
FEUILLE DE PROTECTION DE REVÊTEMENT, ROULEAU DE FEUILLE DE PROTECTION DE REVÊTEMENT ET PROCÉDÉ DE FABRICATION POUR FEUILLE DE PROTECTION DE REVÊTEMENT

(43) Veröffentlichungstag der Anmeldung: 04.12.2019
(73) Patentinhaber: Papierfabriek Doetinchem BV, 7005 BB Doetinchem (NL)
(72) Erfinder: Hans Peter de HEUS, 7064 HN Silvolde (NL)
(74) Vertreter: Metten, Karl-Heinz

(56) Entgegenhaltungen:
- DE-A1- 19 702 314
- DE-U1-202013 011 445

## Beschreibung

Die Erfindung betrifft eine Abdeckschutzfolie mit einer mindestens doppellagigen Schutzschicht, eine Abdeckschutzfolienrolle mit der Abdeckschutzfolie, ein Herstellungsverfahren für die Abdeckschutzfolie und eine Verwendung für die Abdeckschutzfolie.

Abdeckschutzfolien aus Kunststoff oder Papier sind aus dem Stand der Technik hinreichend bekannt. Sie können zum Abdecken, Verpacken und Schützen von Produkten verwendet werden. Auch Lackierfolien für Autos sind aus dem Stand der Technik bekannt.

Die EP 1 149 634 B1 offenbart ein Abdeckband, um beim Autolackieren bestimmte Teile abzudecken, wobei das Abdeckband ein temperaturbeständiges Klebeband und ein Folie umfasst.

Die DE 20 2016 103 142 U betrifft eine Anlage zur Lackierung von Felgen, wobei eine Abdeckpapierrolle und ein Klebeband verwendet werden können.

CN 202 96 5379 U betrifft ein Laminatsystem zum Schutz von elektrischen Geräten.

DE 27 26 655 betrifft ein Verfahren zum Schutz von Oberflächen vor mechanischen und/oder chemischen Einflüssen mit Verbundfolien.

Die DE 10 2004 062 323 A1 betrifft eine selbstklebende Schutzschicht zum Abdecken von chemisch und/oder durch Elektronenstrahlen oder durch UV-Strahlen nicht ausgehärteten Lackschichten.

Die EP 1 479 824 B1 betrifft ein Schutzpapier für lithographische Platten.

Die DE 20 2013 011 445 U1 offenbart ein Abdeckmaterial zum Korrosionsschutz von rohen Oberflächen von auf Paletten gelagerten Metallteilen.

Die DE 197 02 314 A1 betrifft eine ablösbare Schutzfolie für wirkstoffhaltige, insbesondere selbstklebende Pflastersysteme.

Ein Nachteil des Stands der Technik ist, dass eine Abdeckschutzfolie, insbesondere eine

Lackierfolie, oft nur mit großem Aufwand aufgebracht werden kann. Auch ist es oftmals ein Problem, dass der Lack durch die Abdeckschutzfolien aus Papier hindurchdringt oder von Abdeckschutzfolien aus Kunststoff abtropft. Ferner ist auch nachteilig, dass die teilweise oder vollständige Wiederverwertung der Abdeckschutzfolie nicht oder nur mit großem Aufwand möglich ist. Auch ist es nachteilig, dass sich Folien des Stands der Technik nur sehr schlecht recyceln lassen.

Die Aufgabe der vorliegenden Erfindung ist es daher, die Nachteile des Stands der Technik zu überwinden. Insbesondere soll eine einfach aufzubringende Abdeckschutzfolie bereitgestellt werden, die einen verbesserten Schutz während eines Lackiervorgangs bieten kann. Auch ist es eine Aufgabe, eine bessere Wiederverwertbarkeit zu gewährleisten.

Diese Aufgabe wird durch eine Abdeckschutzfolie, insbesondere Lackierfolie, mit einer mindestens doppellagigen Schutzschicht gelöst, wobei besagte mindestens doppellagige Schutzschicht eine Papierlage und eine Kunststofflage umfasst, wobei die Papierlage und Kunststofflage voneinander, vorzugsweise im Wesentlichen rückstandsfrei, lösbar adsorbtionsverbunden sind, insbesondere bevorzugt zerstörungsfrei voneinander lösbar adsorbtionsverbunden.

Es hat sich überraschenderweise gezeigt, dass die vorstehend genannte Abdeckschutzfolie sich besonders einfach auftragen lässt, wobei die Papierlage von der Kunststofflage lösbar ist. Hierbei kann die Papierlage mit einer Schere oder einem Schneidemesser zerschnitten werden. Ohne die vergleichsweise steife Papierlage wäre das Zerschneiden der Abdeckschutzfolie nur unter erschwerten Bedingungen möglich, da Folien, insbesondere dünne Folien, leicht zerknüllen oder an den Schneidemitteln und/oder Händen des Nutzers hängen bleiben, beispielsweise aufgrund der hohen Flexibilität in Verbindung mit elektrostatischen Kräften. Ein weiterer Vorteil gegenüber doppellagigen Folien, bei welchen die Verbindung dauerhaft, beispielsweise durch Klebung und/oder Coextrusion, erfolgt, ist, dass die Papierlage zur getrennten Entsorgung abgelöst werden kann, wobei nur die Kunststofflage haften bleibt. Auch hat die Papierlage den Vorteil, dass der Lack besonders gut aufgefangen wird. Bei reinen Folienlagen des Stands der Technik tropft der Lack oftmals ab, so dass Verunreinigungen entstehen können oder ein ungleichmäßiger Lackauftrag im Abtropfbereich. Bei reinen Papierlagen des Stands der Technik dringt der Lack oder Bestandteile des Lacks, insbesondere Lösungsmittel, durch das Papier hindurch. Dies kann eine ungewünschte Färbung oder Beschädigung der unterliegenden Fläche verursachen.

Adsorbtionsverbundene Lagen im Sinne der vorliegenden Erfindung sind verbundene Lagen, insbesondere die Papierlage und hiermit verbunden die Kunststofflage, die mittels elektrostatischer Anziehungskräfte, Unterdruck und/oder zwischenmolekularen Wechselwirkungen, insbesondere Van-der-Waals-Bindungen, aneinander klebstofffrei, haften und/oder mittels der Anbindung durch elektrostatische Anziehungskräfte und/oder zwischenmolekularen Wechselwirkungen, insbesondere Van-der-Waals-Bindungen und dem Verbinden der Lagen, insbesondere durch Aufrollen der Abdeckschutzfolie, hergestellt wurden. Falls statt der erfindungsgemäßen Adsorbtionsverbindung ein Verkleben erfolgt, lassen sich die Schichten dann nicht mehr gut oder gar nicht trennen. Dies ist jedoch essentiell, um einen optimalen Einsatz z.B. als Lackierfolie, wie vorstehend beschrieben, zu ermöglichen. Adsorbtionsverbundene Lagen, welche unter Nutzung elektrostatischer Anziehungskräfte verbunden wurden, halten überraschenderweise auch, nachdem die elektrostatischen Kräfte nachlassen oder verschwinden. Dies ist möglicherweise darauf zurückzuführen, dass beim Ablösen ein Unterdruck erzeugt wird und/oder aufgrund der Van-der-Waals-Bindungen.

Vorzugsweise haften die adsorbtionsverbundenen Lagen in mindestens einem ersten Bereich mittels Unterdruck, elektrostatischer Anziehungskräfte und/oder zwischenmolekularen Wechselwirkungen, insbesondere Van-der-Waals-Bindungen aneinander, weisen jedoch, insbesondere streifenförmige, zweite Bereiche auf, in welchen eine stärkere lösbare Haftung vorliegt als in dem mindestens einen ersten Bereich, insbesondere wobei die zweiten Bereiche um ein Vielfaches kleiner sind als der mindestens eine erste Bereich. Vorzugsweise sind die zweiten Bereiche durch Klebe- oder Schweißareale ausgebildet. Es hat sich jedoch überraschenderweise gezeigt, dass die zweiten Bereiche für eine lösbare Haftung nicht erforderlich sind.

Vorzugsweise haften die Papierlage und die Kunststofflage in einer besonders zweckmäßigen Ausgestaltung ausschließlich oder zumindest überwiegend aufgrund der Adsorbtionsverbindung aneinander. In dieser Ausgestaltung gibt es vorzugsweise nicht die vorstehend beschriebenen zweiten Bereiche, insbesondere keine Klebe- oder Schweißareale. Insbesondere ist es bevorzugt, wenn die Papierlage und die Kunststofflage, abgesehen von optionalen Hohlräumen oder Hohlrillen, vollflächig adsorptionsverbunden sind, d.h. es gibt keine Klebe- oder Schweißareale zum Verbinden der Papierlage und der Kunststofflage.

Vorzugsweise sind die Papierlage und die Kunststofflage flächig voneinander lösbar. Flächig voneinander lösbar sind die Papierlage und Kunststofflage im Sinne der Erfindung, wenn sie sich separieren lassen, insbesondere entlang der Flächen, an welcher diese kontaktieren, vorzugsweise zerstörungsfrei und/oder rückstandsfrei separieren lassen. Dies bedeutet nicht zwingend, dass die Papierlage und Kunststofflage vor der Trennung zwingend vollflächig verbunden sind, sondern nur, dass eine Separierung, wie beschrieben, möglich ist. Ein Vorteil der Lösbarkeit ist auch, dass die Kunststofflage nochmals verwendet werden kann. Die Papierlage nimmt den Lack größtenteils auf und die unterliegende Kunststofflage wird nicht oder kaum verschmutzt. Daher kann die Kunststofflage wiederverwertet werden, insbesondere recycelt werden.

Vorzugsweise sind die Papierlage und die Kunststofflage flächig verbunden. Flächig verbunden sind die Papierlage und die Kunststofflage, wenn sie entlang ihrer einander zugewandten Oberflächen verbunden sind. Dies ist bei mehrlagigen Folien allgemein üblich. Es erfordert nicht zwingend, dass diese vollflächig verbunden sind, d.h. entlang der gesamten Fläche. Hohlräume und Hohlrillen sind beispielsweise denkbar.

Eine Adhäsionsfolie im Sinne der vorliegenden Erfindung ist eine Folie, insbesondere elastische Dehnfolie, die klebstofffrei an einer Lage, insbesondere der Papierlage, oder einem Gegenstand haftet und zwar teilweise, insbesondere überwiegend, aufgrund von Adhäsionskräften in Form von Wechselwirkungen zwischen den Moleküle der Folie und der Lage bzw. dem Gegenstand, insbesondere Wechselwirkungen in Form von Van-der-Waals-Bindungen zwischen Folie und der Lage bzw. dem Gegenstand. Vorzugsweise ist die Kunststofflage eine solche Adhäsionsfolie, die an der Papierlage und/oder an dem zu lackierenden Gegenstand klebstofffrei haftet bzw. haften kann.

Eine Abdeckschutzfolie im Sinne der vorliegenden Erfindung ist eine Folie, welche geeignet ist, einen Gegenstand durch Umwickeln oder Abdecken des Gegenstands mit der Folie zu schützen. Vorzugsweise handelt es sich bei dem Gegenstand um eine Maschine oder eine mechanische oder elektronische Vorrichtung, insbesondere um ein Fahrzeug bzw. um ein Bauteil hiervon. Die erfindungsgemäße Abdeckschutzfolie kann eine Lackierfolie sein, d.h. eine Folie die ausgelegt und eingerichtet ist, um Bauteile beim Lackieren vor dem, insbesondere flüssigen oder pulverförmigen, Lack zu schützen. Eine Lackierfolie sollte daher resistent gegenüber Lacken und ggf. in den Lacken enthaltenen Lösungsmitteln sein.

Vorzugsweise weist die Papierlage ein Flächengewicht von 10 g/m² bis 100 g/m², insbesondere von 25 g/m² bis 75 g/m², insbesondere bevorzugt von 35 g/m² bis 60 g/m², auf. Dieses Flächengewicht hat sich als besonders geeignet erwiesen; ein solches Papier ist regelmäßig hinreichend flexibel für eine formschlüssige Anbringung und hinreichend steif für eine gute Verarbeitung. Falls ein zu flexibles Papier gewählt wird, ähneln die Eigenschaften der Kunststofflage. Ein Vorteil der Papierlage mit einem Mindestflächengewicht ist eine üblicherweise höhere Eigensteifigkeit als die Kunststofflage, die eine kontrollierte Anbringung der Abdeckschutzfolie ermöglicht, ohne dass diese sich unkontrolliert um die Hand wickelt. Vorzugsweise ist es auch vorgesehen, dass die Eigensteifigkeit der Papierlage höher als die Eigensteifigkeit der Kunststofflage ist. Wenn das Flächengewicht jedoch zu hoch wird, ist es schwieriger, Gegenstände formschlüssig zu umwickeln und/oder abzudecken. Auch erhöht sich die Gefahr des selbständigen Ablösens.

Vorzugsweise sind zwischen der Papierlage und der Kunststofflage in einer Ausgestaltung Hohlräume, insbesondere längliche Hohlräume und/oder Hohlrillen, vorgesehen. Dies erleichtert das Trennen von Papierlage und Kunststofflage voneinander. Die Lagen müssen also nicht zwingend vollflächig adsorbtionsverbunden vorliegen, sondern es ist auch bevorzugt, wenn die Papierlage und Kunststofflage adsorbtionsverbunden sind, wobei Bereiche mit den besagten Hohlräumen, insbesondere Hohlrillen, ohne Adsorbtionsverbindung vorhanden sind. Obgleich Hohlräume jegliche Form annehmen können, beispielsweise kreisförmig, haben sich Hohlrillen als besonders geeignet erwiesen. Hohlrillen sind Hohlräume, die zumindest bereichsweise tunnelförmig sind und/oder einen mittleren Durchmesser und eine mittlere Längserstreckung aufweisen, wobei die mittlere Längserstreckung ein Vielfaches des mittleren Durchmessers beträgt. Es hat sich gezeigt, dass solche Hohlrillen einen besonders guten Ausgangspunkt für die Auftrennung von Papierlage und Kunststofflage bilden. Die Hohlrillen können dabei beispielsweise parallel oder ungeordnet angeordnet sein. Vorzugsweise machen die Hohlräume, insbesondere längliche Hohlräume und/oder Hohlrillen, weniger als 50 %, insbesondere bevorzugt weniger als 25 %, der Fläche zwischen der Papierlage und der Kunststofflage aus.

In einer alternativen Ausgestaltung sind die Papierlage und die Kunststofflage vollflächig adsorbtionsverbunden, d.h. sie sind über die gesamte Fläche hinweg an jedem Punkt verbunden, im Wesentlichen ohne Hohlräume und/oder Hohlrillen. Dies resultiert in einer besseren Anbindung, wobei die Papierlage und die Kunststofflage immer noch voneinander gut ablösbar sind.

In einer weiteren Ausgestaltung ist es vorgesehen, dass die Papierlage porös, insbesondere mikroporös, ist und/oder eine poröse, insbesondere mikroporöse, Beschichtung aufweist. Mikroporös im Sinne der vorliegenden Erfindung bedeutet, dass Poren umfasst sind, die einen Durchmesser von weniger als 1 µm aufweisen. Gegenüber versiegelten Papieren hat dies den Vorteil, dass das Papier Lacke absorbieren kann. Ein Nachteil herkömmlicher Abdeckfolien ist, dass Lacke auf der Folie ungetrocknet verbleiben und sich sammeln oder abtropfen können. Dies gefährdet das Lackierergebnis: Mit porösem Papier kann der Lack durch die Poren aufgenommen werden, so dass diese Gefahr nicht besteht.

In einer besonders bevorzugten Ausgestaltung ist die Kunststofflage im Wesentlichen geschlossen, d.h. sie weist keine Öffnungen oder Perforation auf. Wasser, Lacke oder Lösungsmittel können daher die Kunststofflage nicht durchdringen und auch nicht von dieser absorbiert werden.

In einer weiteren besonders bevorzugten Ausgestaltung ist die Kunststofflage transparent, vorzugsweise wobei mindestens 80 %, insbesondere mindestens 90 %, des sichtbaren Lichts bei 400 nm, 500 nm, 600 nm und/oder 700 nm, insbesondere im Bereich von 380 bis 750 nm, transmittiert wird. Dies hat den Vorteil, dass durch eine Entfernung der Papierlage geprüft werden kann, ob die Lackierung (insbesondere im Randbereich der Lackierfolie) korrekt erfolgt ist, bevor auch die Kunststofflage entfernt wird. Bei nicht transparenten Kunststofflagen kann das Ergebnis der Lackierung erst ganz am Ende, d.h. nach vollständiger Entfernung der Abdeckschutzfolie ermittelt werden. Falls eine einlagige transparente Folie aus dem Stand der Technik verwendet wird, kann das Endergebnis auch nicht beurteilt werden, da Lackverschmutzungen auf der Folie die Transparenz beeinträchtigen. Vorliegend werden durch die Papierlage gröbere Lackverschmutzungen auf der Kunststofflage vermieden.

Vorzugsweise ist es vorgesehen, dass die Kunststofflage eine Dicke von maximal 30 µm, insbesondere maximal 15 µm, insbesondere bevorzugt maximal 10 µm, aufweist. Dies bewirkt eine besonders gute Adsorbtionsverbindung, insbesondere auch durch Unterdruck, elektrostatische Kräfte und/oder Van-der-Waals-Bindungen, bevorzugt durch elektrostatische Kräfte oder durch elektrostatische Kräfte und Van-der-Waals-Bindungen.

Vorzugsweise umfasst die Kunststofflage in einer Ausgestaltung einen thermoplastischen Kunststoff, insbesondere besteht überwiegend oder vollständig aus diesem. Als besonders geeignet hat sich beispielsweise Polyethylen erwiesen, insbesondere HDPE.

Vorzugsweise weist die Papierlage einen Wasseranteil von 2 bis 10 Gew.-%, insbesondere 3 bis 9 Gew.-%, insbesondere bevorzugt 4 bis 8 Gew.-% auf. Dies ermöglicht eine besondere effektive Anbindung mittels elektrostatischer Kräfte.

Alternativ oder zusätzlich kann es vorgesehen sein, dass die Papierlage mit mindestens einem Polymer, insbesondere Polyethylen, beschichtet ist, insbesondere irreversibel mit diesem verbunden ist, wobei dieses Polyethylen dann eine weitere Lage ausbildet. Diese Beschichtung bzw. weitere Lage entspricht nicht der adsorptionsverbunden Kunststofflage (es wäre also mindestens drei Lagen). Die weitere Lage hat den Vorteil, dass die Adsorbtionskräfte verstärkt werden können und ein zusätzlicher Schutz bereitgestellt wird. Nachteilig ist allerdings, dass dies die Porosität ggf. negativ beeinflussen kann, so dass Papierlagen besonders bevorzugt sind, welche die zusätzliche irreversible Beschichtung nicht aufweisen. Vorzugsweise umfasst die Abdeckschutzfolie genau eine Kunststofflage, insbesondere Polyethylenlage, welche wie bereits beschrieben adsorptionsverbunden vorliegt mit der Papierlage vorliegt.

In einer Ausgestaltung weist die Abdeckschutzfolie mindestens einen Rand auf, wobei an dem Rand mindestens ein Klebestreifen umfasst ist. Es kann sich um Klebestreifensegmente handeln. Besonders bevorzugt ist es jedoch, wenn der Klebestreifen sich entlang des ganzen Randes erstreckt. Über Klebestreifen kann die Abdeckschutzfolie besser an einem zu lackierenden Gegenstand befestigt werden. In einer alternativen Ausgestaltung besteht die Abdeckschutzfolie aus der Schutzschicht. Es handelt sich demnach um eine mindestens doppellagige Abdeckschutzfolie, vorzugsweise eine doppellagige Abdeckschutzfolie, die eine Papierlage und eine Kunststofflage umfasst, wobei die Papierlage und Kunststofflage lösbar adsorbtionsverbunden, sind, insbesondere zerstörungsfrei lösbar adsorbtionsverbunden.

Vorzugsweise besteht die Papierlage überwiegend oder vollständig aus Recyclingpapier. Es hat sich gezeigt, dass Recyclingpapier besonders geeignet ist und eine umweltschonendere Entsorgung ermöglichen kann. Auch ist die Absorption von Lack im Regelfall verbessert, was innerhalb der doppellagigen Schutzschicht von Vorteil ist.

Vorzugsweise ist es vorgesehen, dass die Papierlage eine erste und eine gegenüberliegende zweite Seite umfasst, wobei die zweite Seite glatter und/oder glänzender als die erste Seite ist, insbesondere wobei die Kunststofflage an der zweiten Seite befestigt ist. Vorzugsweise weist die erste Seite der Papierlage eine höhere Rauheit nach Bendtsen gemäß DIN 53108:2011-01 auf als die zweite Seite der Papierlage, insbesondere wobei die Kunststofflage an der zweiten Seite befestigt ist. Es hat sich überraschenderweise gezeigt, dass die Lösbarkeit besser mit einer glatten Seite erreicht werden kann, während die raue Seite einen besonders guten Schutz bietet und effizienter ein Abtropfen des Lacks unterbindet.

Vorzugsweise ist die Abdeckschutzfolie eine flexible mindestens doppellagige Lackierfolie. In einer Ausgestaltung kann es vorgesehen sein, dass die Abdeckschutzfolie aus der mindestens doppellagigen Schutzschicht überwiegend oder vollständig besteht. Vorzugsweise ist die Abdeckschutzfolie in einer Ausgestaltung nicht mindestens doppellagig sondern genau doppellagig, wobei die Kunststofflage und Papierlage die beiden Lagen sind.

Die Erfindung betrifft ferner eine Abdeckschutzfolienrolle, insbesondere in Form einer Materialrolle, mit einer umlaufenden Abdeckschutzfolie, wie sie vorstehend beschrieben wurde. Besagte Abdeckschutzfolienrolle umfasst vorzugsweise einen Kern, insbesondere ganz oder überwiegend aus Papier, Pappe und/oder Kunstsoff, wobei die Abdeckschutzfolie um diesen Kern gewickelt ist. Vorzugsweise weist der Kern eine maximale Längserstreckung von 30 cm bis 150 cm, vorzugsweise 50 cm bis 110 cm, auf.

"Überwiegend" bedeutet im Sinne der vorliegenden Erfindung vorzugsweise zu mehr als 50 %. Ein Gegenstand der überwiegend aus einem Material besteht, besteht zu mehr als 50 Gew.-% aus dem Material, vorzugsweise zu mindestens 70 Gew.-%, insbesondere bevorzugt zu mindestens 90 Gew.-%, aus dem Material.

Die vorstehend beschriebene Abdeckschutzfolienrolle ist vorzugsweise ausgelegt und eingerichtet, Bauteile einer Einheit, insbesondere eines Fahr- oder Flugzeugs, vorzugsweise Automobils, einzuwickeln und/oder abzudecken. Hierbei wird die Abdeckschutzfolie beim Umwickeln bzw. Abdecken der Bauteile von der Abdeckschutzfolienrolle abgerollt. Obgleich Abdeckschutzfolienrollen ohne Kern denkbar sind, haben sich solche mit Kern als besonderes geeignet hierfür erwiesen. In einer Ausgestaltung ist der Kern ausgelegt und eingerichtet, um die Abdeckschutzfolie von einer Tragevorrichtung zu entrollen.

In einer weiteren zweckmäßigen Ausgestaltung wird die Abdeckschutzfolienrolle erhalten, indem die Kunststofflage elektrostatisch aufgeladen, mit der Papierlage verbunden und dann auf den Kern aufgerollt wird. Überraschenderweise werden hierdurch die Lagen besonders gut lösbar und dauerhaft miteinander verbunden.

Die Erfindung betrifft ferner ein Herstellungsverfahren für die vorstehend beschriebene Abdeckschutzfolie und/oder Abdeckschutzfolienrolle umfassend die folgenden Schritte, insbesondere in dieser Reihenfolge,
a) flächiges Kontaktieren der Kunststofflage mit der Papierlage,
b) einseitiges oder beidseitiges elektrostatisches Aufladen der Kunststofflage und/oder Papierlage, insbesondere mindestens mit einem Ionisierungsstab, wobei die Kunststofflage an der Papierlage lösbar unter Erzeugung der Abdeckschutzfolie adsorbiert.

Mit dem erfindungsgemäßen Herstellungsverfahren wird es ermöglicht, die Kunststofflage und Papierlage vor dem gemeinsamen Aufrollen aneinander zu fixieren. Wird ein gemeinsames Aufrollen ohne eine elektrostatische Aufladung vorgenommen, halten die Kunststofflage und Papierlage nicht optimal oder gar nicht zusammen. Wird statt der elektrostatischen Aufladung ein Klebstoff verwendet oder koextrudiert, lassen sich die Kunststofflage und Papierlage nicht zerstörungsfrei und rückstandsfrei trennen. Überraschenderweise wird durch die elektrostatische Aufladung eine geeignete dauerhafte Anbindung der Lagen erzielt, die sich mit geringem Kraftaufwand voneinander zerstörungsfrei trennen lassen. Vorzugsweise wird hierbei mindestens ein Ionisierungsstab verwendet, insbesondere mindestens ein Ionisierungsstab, an welchem die Kunststofflage vorbeigeführt wird. Überraschenderweise hält diese Anbindung auch nach dem Aufrollen. Selbst nach mehreren Monaten konnte noch eine Haftung zwischen den Lagen festgestellt werden.

Das elektrostatische Aufladen erfolgt beim Herstellungsverfahren vorzugsweise kontaktlos, wobei insbesondere die Kunststofflage ohne Kontakt an dem mindestens einen Ionisierungsstab vorbeigeführt wird. In einer Ausgestaltung ist es vorgesehen, dass der Ionisierungsstab an der Papierlage, insbesondere auf der der Kunststofflage gegenüberliegenden Seite der Papierlage, vorbeigeführt wird, wobei die gegenüberliegende Kunststofflage ein elektrostatisches Aufladen erfährt. Die Ladungsträger, insbesondere Ionen, welche von dem Ionisierungsstab erzeugt werden, können das Papier passieren oder es findet ein Ladungstransfer durch das Papier in sonstiger Weise statt. In einer weiteren Ausgestaltung kann es vorgesehen sein, dass sowohl die Papier- als auch die Kunststofflage jeweils ein- oder beidseitig elektrostatisch aufgeladen werden und somit beidseitig Ionisierungsstäbe vorgesehen sind.

Vorzugsweise wird beim Herstellungsverfahren nur oder überwiegend nur die Kunststofflage aufgeladen. In einer alternativen Ausgestaltung wird jedoch neben der Kunststofflage auch die Papierlage ionisiert, so dass beide Lagen elektrostatisch aufgeladen sind, insbesondere mit entgegengesetzter Ladung und/oder induzierter Ladung. Durch die unterschiedliche Aufladung von Papierlage und Kunststofflage werden diese voneinander angezogen. Es hat sich jedoch gezeigt, dass eine aktive Aufladung der Kunststofflage hinreichend ist.

In einer Ausgestaltung umfasst das Herstellungsverfahren den folgenden Schritt
c) Aufrollen der Abdeckschutzfolie auf einen Kern unter Ausbildung der Abdeckschutzfolienrolle.

In einer weiteren Ausgestaltung umfasst das flächige Kontaktieren der Kunststofflage mit der Papierlage in Schritt a), dass eine Papierlagenrolle und eine Kunststofflagenrolle, insbesondere synchron, abgerollt werden und in einer durch Führungsrollen gelagerten, insbesondere auf Führungsrollen gelagerten, mindestens doppellagige Bahn zusammengeführt werden und/oder flächig kontaktieren, wobei besagte mindestens doppellagige Bahn in Schritt b) an dem mindestens einen Ionisierungsstab vorbeigeführt wird, um die Abdeckschutzfolie auszubilden, welche in Schritt c) unter Ausbildung der Abdeckschutzfolienrolle aufgerollt wird.

Die Erfindung betrifft ferner eine Abdeckschutzfolie und Abdeckschutzfolienrolle, welche nach dem vorstehenden Herstellungsverfahren erzeugt wurde. Vorzugsweise handelt es sich dabei um einer Abdeckschutzfolienrolle, wie sie vorstehende beschrieben wurde.

Die Erfindung betrifft ferner die Verwendung der vorstehend beschriebenen Abdeckschutzfolie und/oder der vorstehend beschriebenen Abdeckschutzfolienrolle als Beschichtung für mindestens ein Bauteil für ein Fahr- oder Flugzeug, insbesondere Automobil, oder eines Fahr- oder Flugzeugs, insbesondere Automobils. Hierbei kann es sich beispielsweise um eine Radkappe oder einen Außenspiegel für ein Fahrzeug handeln. Es kann aber auch die Radkappe oder der Außenspiegel eines Fahrzeugs sein, d.h. die Bauteile sind schon an dem Fahrzeug verbaut.

Die Verwendung betrifft insbesondere die Beschichtung für mindestens ein Bauteil eines Fahr- oder Flugzeugs, insbesondere Automobils, während des Lackierens, insbesondere als Lackierfolie. Es hat sich gezeigt, dass mit der Papierlage ein Großteil des Lacks bereits vor dem Kontakt mit der Kunststofflage aufgesaugt werden kann, insbesondere absorbiert werden kann, wobei die Kunststofflage am Automobil verbleibt. Insbesondere kann so das Ergebnis der Lackierung im Randbereich der Abdeckschutzfolie bewertet werden, ohne dass diese gänzlich entfernt werden muss.

Ein Verfahren zum Lackieren einer Einheit unter Einsatz der vorstehend beschriebenen Abdeckschutzfolie oder der vorstehend beschriebenen Abdeckschutzfolienrolle umfasst die folgenden Schritte
i) Aufbringen mindestens eines Abschnitts der Abdeckschutzfolie auf mindestens ein Bauteil und/oder einen Bereich der Einheit, vorzugsweise eines Fahr- oder Flugzeugs, besonders bevorzugt eines Automobils,
ii) Lackieren der das Bauteil und/oder den Bereich enthaltenden Einheit, insbesondere wobei die Einheit ein Fahr- oder Flugzeug umfassend das Bauteil bzw. den Bereich ist,
iii) Trennung von Papierlage und Kunststofflage, insbesondere Entfernung der Papierlage, wobei die Kunststofflage auf dem mindestens einen Bauteil der Einheit, insbesondere des Fahr- oder Flugzeugs, verbleibt, und
iv) vorzugsweise Entfernung der Kunststofflage.

Dementsprechend bestimmt der von der Abdeckschutzfolie abgedeckte Abschnitt der Einheit, welche Bereiche und/oder Bauteile nicht lackiert werden. Ein nicht von der Abdeckschutzfolie abgedeckte weiterer Abschnitt der Einheit wird entsprechend mit Lack versehen. Mit dem vorstehenden Lackierverfahren wird eine besonders sichere Lackierung erreicht. Überschüssiger Lack kann in Schritt iii) entfernt werden, ohne dass der Schutz komplett wegfällt, da die, insbesondere transparente, Kunststofflage verbleibt. Das Ergebnis der Lackierung kann in diesem Zustand schon bewertet werden. Vorzugsweise ist es vorgesehen, dass die Papierlage in Schritt ii) Lack auch absorbiert und der absorbierte Lack in Schritt iii) entfernt wird. Auf diesem Wege kann überschüssiger flüssiger Lack vermieden werden. Die Erfindung betrifft ferner die Verwendung der Abdeckschutzfolie für das vorstehend beschriebene Lackierverfahren.

Der Erfindung liegt die überraschende Erkenntnis zu Grunde, dass eine verbesserte Abdeckschutzfolie erhalten werden kann, indem eine Papierlage und eine Kunststofflage kombiniert werden. Bevorzugt ist hierbei, dass die beiden Lagen nicht dauerhaft, beispielsweise durch Klebstoff oder Koextrudieren verbunden werden, sondern lösbar miteinander verbunden sind, insbesondere durch Adsorbtionskräfte. Dies kann überraschenderweise mittels einer elektrostatischen Aufladung gut erreicht werden. Auch werden die Nachteile herkömmlicher Folien bezüglich eines Abtropfens oder einer Durchlässigkeit überwunden. Die Papierlage nimmt den Lack auf und die Kunststofflage kann weiterverwertet werden, insbesondere recycelt werden. Gleichzeitig stellt die Kunststofflage sicher, dass selbst falls Lack durch das Papier hindurchdringt, dieses nicht auf den zu lackierenden Gegenstand gelangt.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigt:
- Figur 1: eine schematische Querschnittsansicht einer Ausführungsform der erfindungsgemäßen Abdeckschutzfolie;
- Figur 2: eine schematische Seitenansicht eines Automobils;
- Figur 3: eine schematische Seitenansicht des Automobils mit Abschnitten der der erfindungsgemäßen Abdeckschutzfolie;
- Figur 4: eine schematische Seitenansicht einer Ausführungsform der Abdeckschutzfolienrolle;
- Figur 5: eine schematische Frontalansicht einer Ausführungsform der erfindungsgemäßen Abdeckschutzfolie; und
- Figur 6: eine schematische Ansicht eines Verfahrensstadiums des Herstellungsverfahrens für die Abdeckschutzfolie,

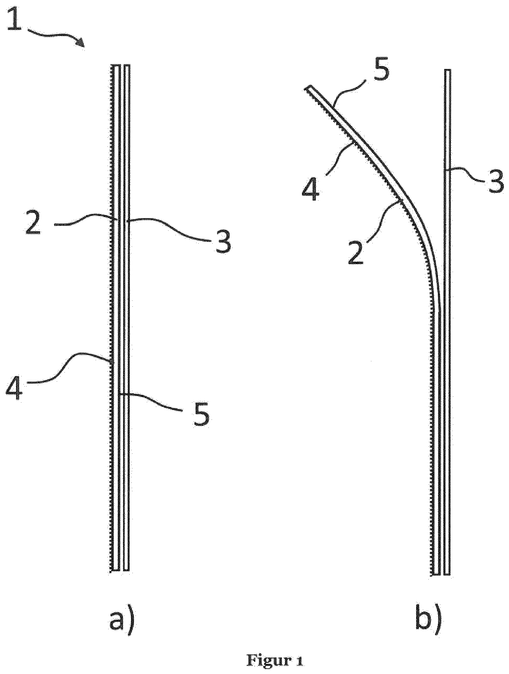

Figur 1 a) zeigt einen Abdeckschutzfolie mit einer mindestens doppellagigen Schutzschicht 1, wobei die Schutzschicht 1 eine Papierlage 2 und eine Kunststofflage 3 umfasst, wobei die Papierlage 2 und Kunststofflage 3 adsorbtionsverbunden und flächig zerstörungsfrei lösbar verbunden sind. Die Papierlage 2 besteht in der dargestellten Ausführungsform überwiegend aus Recyclingpapier. Sie umfasst eine erste Seite 4 und eine gegenüberliegende zweite Seite 5, wobei die zweite Seite 5 glatter als die erste Seite 4 ist, wobei die Kunststofflage 3 an der zweiten Seite 5 befestigt ist. Figur 1 b) zeigt wie die Papierlage 2 von der Kunststofflage 3 flächig zerstörungsfrei gelöst wird. Diese Ausführungsform umfasst keine Hohlräume und die Lagen sind vollflächig verbunden.

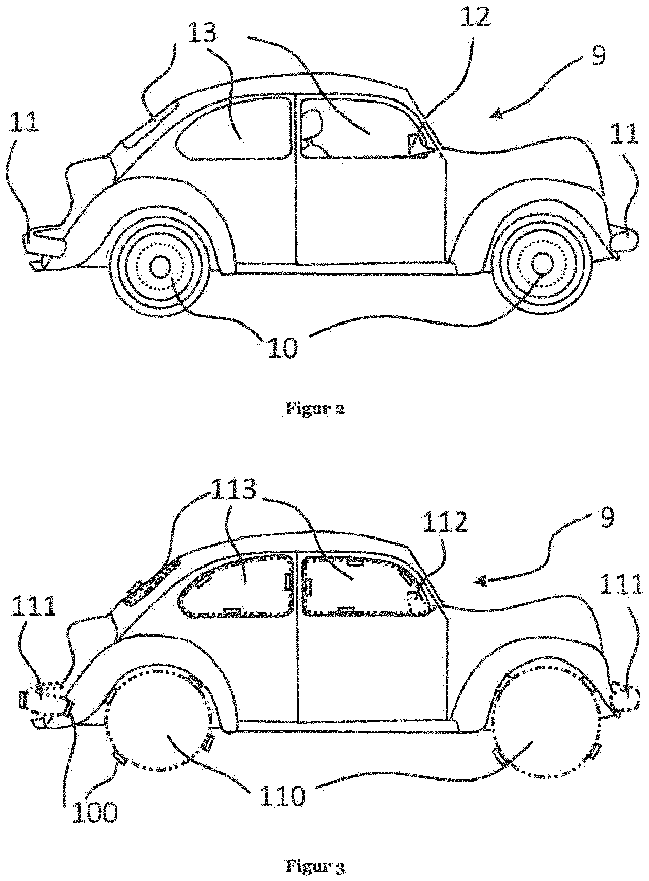

Figur 2 zeigt ein Automobil 9, wobei das Automobil 9 Bauteile aufweist, die vorzugsweise bei einer Lackierung nicht mit lackiert werden sollen. Mögliche Bauteile sind beispielsweise die Räder und Radkappen 10, die Stoßstangen 11, die Rückspiegel 12 und die Fenster 13.

Figur 3 zeigt das Automobil 9 der Figur 1, wobei die Räder durch Abdeckschutzfolienabschnitte 110 für Räder, die Stoßstangen durch Abdeckschutzfolienabschnitte 111 für Stoßstangen, die Rückspiegel durch Abdeckschutzfolienabschnitte 112 und die Fenster durch Abdeckschutzfolienabschnitt 113 geschützt wurden. Klebestreifen 100 werden verwendet, um besagte Abdeckschutzfolienabschnitte besser zu fixieren. Obgleich hier nur Klebestreifensegmente gezeigt sind, hat es sich gezeigt, dass es zweckmäßig ist, wenn an der ganzen Randlänge der Abdeckschutzfolie Klebestreifen eingesetzt werden, mithin auch durchgehende Klebestreifen (nicht gezeigt).

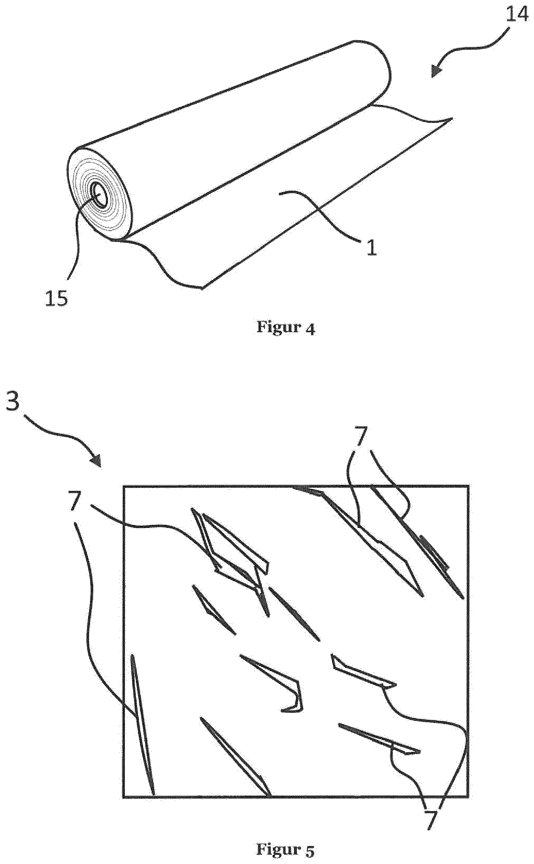

Figur 4 zeigt Abdeckschutzfolienrolle 14 mit einer umlaufenden Abdeckschutzfolie, wobei die Abdeckschutzfolienrolle 14 einen Kern 15 umfasst, um welchen die Abdeckschutzfolie samt Schutzschicht 1 gewickelt ist.

Figur 5 zeigt eine schematische Frontalansicht einer Ausführungsform der erfindungsgemäßen Abdeckschutzfolie und zwar von der Seite der Kunststofflage 3 her. Obgleich die Abdeckschutzfolie ohne Hohlräume denkbar ist, hat es sich für die Ablösbarkeit als vorteilhaft erwiesen, wenn Hohlräume vorgesehen sind. Demensprechend sind in einer Ausgestaltung zwischen der Kunststofflage 3 und der unterliegenden Papierlage Hohlräume 7 vorgesehen. Vorliegend sind die Hohlräume länglich, so dass es sich um Hohlrillen handelt. Obgleich diese geordnet vorliegen können, ist auch eine ungeordnete Anordnung denkbar.

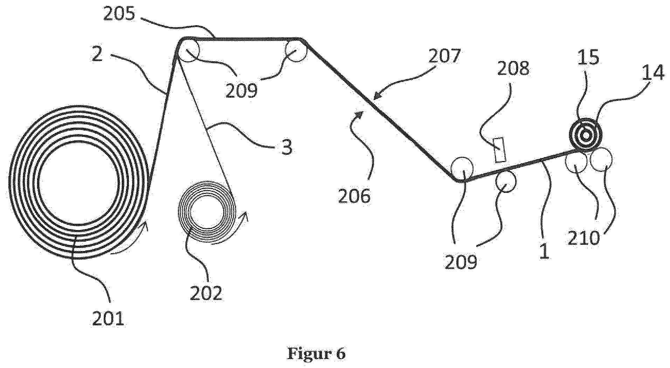

Figur 6 zeigt eine schematische Ansicht eines Verfahrensstadiums des Herstellungsverfahrens für die Abdeckschutzfolie, wobei in einem ersten Schritt eine Papierlagenrolle 201 und eine Kunststofflagenrolle 202 bereitgestellt werden. Von der Papierlagenrolle 201 wird die Papierlage 2 abgerollt und von der Kunststofflagenrolle 202 die Kunststofflage 3, welche anschließend zusammenführt werden, und eine doppellagige Bahn 205 aus im Wesentlichen unverbundenen Lagen ausbilden. Die doppellagige Bahn umfasst eine erste Seite 207 gebildet durch die Papierlage 2 und eine gegenüberliegende zweite Seite 206 gebildet durch die Kunststofflage 3. Die Führungsrollen 209 leiten die Bahn zu mindestens einem Ionisierungsstab 208, wobei ein elektrostatisches Aufladen der Kunststofflage 3 erfolgt und die Kunststofflage 3 an der Papierlage 2 lösbar unter Erzeugung der Schutzschicht 1 adsorbiert. Die Schutzschicht 1 wird mit Hilfe von Führungsrollen 210 unter Ausbildung der Abdeckschutzfolienrolle 14 aufgerollt auf einen Kern 15.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Abdeckschutzfolie mit einer mindestens doppellagigen Schutzschicht (1), insbesondere Lackierfolie, wobei die Schutzschicht (1) eine Papierlage (2) und eine Kunststofflage (3) umfasst und wobei die Papierlage (2) und Kunststofflage (3) lösbar adsorbtionsverbunden sind.

2. Abdeckschutzfolie nach Anspruch 1, **dadurch gekennzeichnet, dass** die Papierlage (2) ein Flächengewicht von 10 g/m² bis 100 g/m², insbesondere von 25 g/m² bis 75 g/m², vorzugsweise von 35 g/m² bis 60 g/m², aufweist und/oder dass die Kunststofflage (3) Polyethylen umfasst oder hieraus besteht.

3. Abdeckschutzfolie nach Anspruch 1 oder 2, **dadurch gekennzeichnet, dass** zwischen der Papierlage (2) und der Kunststofflage (3) Hohlräume (7), insbesondere Hohlrillen, vorgesehen sind und/oder dass die Papierlage (2) porös, insbesondere mikroporös, ist und/oder eine poröse, insbesondere mikroporöse, Beschichtung aufweist.

4. Abdeckschutzfolie nach einem der vorangehenden Ansprüche, **dadurch**
**gekennzeichnet, dass**
die Kunststofflage (3) geschlossen ist und/oder eine Dicke von maximal 30 µm, insbesondere maximal 15 µm, vorzugsweise maximal 10 µm, aufweist.

5. Abdeckschutzfolie nach einem der vorangehenden Ansprüche, **dadurch**
**gekennzeichnet, dass**
die Papierlage (2) einen Wassergehalt von 2 bis 10 Gew.-%, insbesondere 3 bis 9 Gew.-%, vorzugsweise 4 bis 8 Gew.-%, ausweist.

6. Abdeckschutzfolie nach einem der vorangehenden Ansprüche, **dadurch**
**gekennzeichnet, dass**
die Papierlage (2) überwiegend oder vollständig aus Recyclingpapier besteht und/oder dass die Papierlage (2) eine erste Seite (4) und eine gegenüberliegende zweite Seite (5) umfasst, wobei die erste Seite (4) eine größere Rauheit nach Bendtsen gemäß DIN 53108:2011-01 als die zweite Seite (5) aufweist, insbesondere wobei die Kunststofflage (3) an der zweiten Seite befestigt ist.

7. Abdeckschutzfolie nach einem der vorangehenden Ansprüche, **dadurch**
**gekennzeichnet, dass**
die Abdeckschutzfolie gemäß dem Herstellungsverfahren nach einem der Ansprüche 9 oder 11 erhalten wurde.

8. Abdeckschutzfolienrolle (14) mit einer aufgewickelten, insbesondere aufgerollten, Abdeckschutzfolie nach einem der vorangehenden Ansprüche, wobei die Abdeckschutzfolienrolle vorzugsweise einen Kern (15), insbesondere ganz oder überwiegend bestehend aus Papier, Pappe und/oder Kunstsoff, umfasst, um welchen die Abdeckschutzfolie gewickelt ist, insbesondere eine Abdeckschutzfolienrolle (14) erhältlich nach dem Herstellungsverfahren nach einem der Ansprüche 10 oder 11.

9. Herstellungsverfahren für die Abdeckschutzfolie nach einem der Ansprüche 1 bis 7 oder für die Abdeckschutzfolienrolle (14) nach Anspruch 8, umfassend die folgenden Schritte,
a) flächiges Kontaktieren der Kunststofflage (3) mit der Papierlage (2),
b) einseitiges oder beidseitiges elektrostatisches Aufladen der Kunststofflage (3) und/oder der Papierlage (2), insbesondere mit mindestens einem Ionisierungsstab (208), wobei die Kunststofflage (3) an der Papierlage (2) lösbar unter Erzeugung der Schutzschicht (1) adsorbiert.

10. Herstellungsverfahren nach Anspruch 9, wobei dieses, insbesondere nach Schritt b), den folgenden Schritt umfasst
c) Aufrollen der Abdeckschutzfolie, insbesondere der Schutzschicht (1), auf einen Kern (15) unter Ausbildung der Abdeckschutzfolienrolle (14).

11. Herstellungsverfahren nach Anspruch 9 oder 10, **dadurch gekennzeichnet, dass** das flächige Kontaktieren der Kunststofflage (3) mit der Papierlage in Schritt a) erfolgt, indem eine Papierlagenrolle (201) und eine Kunststofflagenrolle (202), insbesondere synchron, abgerollt werden und in einer durch Führungsrollen (209) gelagerten mindestens doppellagige Bahn (205) zusammengeführt werden, wobei besagte mindestens doppellagige Bahn (205) in Schritt b) an dem mindestens einen Ionisierungsstab (208) vorbeigeführt wird, um die Abdeckschutzfolie auszubilden, welche vorzugsweise in Schritt c) unter Ausbildung der Abdeckschutzfolienrolle (14) aufgerollt wird.

12. Verwendung der Abdeckschutzfolie nach einem der Ansprüche 1 bis 7 oder der Abdeckschutzfolienrolle (14) nach Anspruch 8 als Beschichtung für mindestens ein Bauteil, bevorzugt eines Fahr- oder Flugzeuges, besonders bevorzugt eines Automobils (9).

13. Verwendung nach Anspruch 12 als Beschichtung für mindestens ein Bauteil, bevorzugt für ein Fahr- oder Flugzeug, besonders bevorzugt für ein Automobil, oder ein Bauteil, welches Bestandteil eines Fahr- oder Flugzeuges, insbesondere Automobils (9), ist, während des Lackierens, insbesondere als Lackierfolie.

## Claims

1. A protective cover film with an at least double-layered protective coating (1), in particular varnish film, wherein the protective coat (1) comprises a paper layer (2) and a plastic layer (3), and wherein the paper layer (2) and the plastic layer (3) are detachably adsorption bonded.

2. The protective cover film according to Claim 1, **characterized in that** the paper layer (2) has an area density of 10 g/m² to 100 g/m², in particular of 25 g/m² to 75 g/m², preferably of 35 g/m² to 60 g/m², and/or **in that** the plastic layer (3) comprises polyethylene or consists thereof.

3. The protective cover film according to Claim 1 or 2, **characterized in that** cavities (7), in particular hollow grooves, are provided between the paper layer (2) and the plastic layer (3) and/or **in that** the paper layer (2) is porous, in particular microporous, and/or has a porous, in particular microporous, coating.

4. The protective cover film according to any one of the preceding claims, **characterized in that**
the plastic layer (3) is sealed and/or has a thickness of no more than 30 µm, in particular no more than 15 µm, preferably no more than 10 µm.

5. The protective cover film according to any one of the preceding claims, **characterized in that**
the paper layer (2) has a water content of 2 to 10 wt%, in particular 3 to 9 wt%, preferably 4 to 8 wt%.

6. The protective cover film according to any one of the preceding claims, **characterized in that**
the paper layer (2) consists mostly or completely of recycling paper and/or **in that** the paper layer (2) comprises a first side (4) and an opposing second side (5), wherein the first side (4) has a larger Bendtsen roughness according to DIN 53108:2011-01 than the second side (5), in particular wherein the plastic layer (3) is attached to the second side.

7. The protective cover film according to any one of the preceding claims, **characterized in that**
the protective cover film was obtained with the manufacturing method according to anyone of Claims 9 or 11.

8. A protective cover film roll (14) with a wound, in particular rolled up, protective cover film according to any one of the preceding claims, wherein the protective cover film roll preferably comprises a core (15), in particular consisting completely or mostly of paper, cardboard and/or plastic, around which the protective cover film is wound, in particular a protective cover film roll (14) obtainable with the manufacturing method according to anyone of Claims 10 or 11.

9. A manufacturing method for the protective cover film according to any one of claims 1 to 7 or for the protective cover film roll (14) according to Claim 8, comprising the following steps:
a) flatly contacting the plastic layer (3) with the paper layer (2),
b) electrostatically charging the plastic layer (3) and/or the paper layer (2) on one or both sides, in particular with at least one ionization rod (208), wherein the plastic layer (3) adsorbs detachably on the paper layer (2) to produce the protective coat (1).

10. The manufacturing method according to Claim 9, wherein said manufacturing method comprises, in particular after step b), the following step:
c) rolling up the protective cover film, in particular the protective coat (1), onto a core (15) to form the protective cover film roll (14).

11. The manufacturing method according to Claim 9 or 10, **characterized in that** the flat connecting of the plastic layer (3) with the paper layer in step a) occurs by a paper layer roll (201) and a plastic layer roll (202) being, in particularly synchronously, unrolled and joined together in an at least double-layered track (205) positioned by guide rolls (209), wherein said double-layered track (205) being guided past the at least one ionizing rod (208) in step b) in order to form the protective cover film which is preferably rolled up in step c) to form the protective cover film roll (14).

12. Use of the protective cover layer according to any one of Claims 1 to 7 or of the protective cover layer roll (14) according to Claim 8 as a coating for at least one construction component, preferably of a vehicle or an airplane, particularly preferably of an automobile (9).

13. The use according to Claim 12 as a coating for at least one construction component, preferably of a vehicle or an airplane, particularly preferably of an automobile, or a construction component which is a part of a vehicle or an airplane, in particular of an automobile (9), during varnishing, in particular as a varnish film.

## Revendications

1. Feuille de protection de revêtement avec au moins un film de protection à double couche (1), en particulier un film pour peinture, dans laquelle le film de protection (1) comporte une couche de papier (2) et une couche de matière plastique (3) et dans laquelle la couche de papier (2) et la couche de matière plastique (3) sont liées par adsorption de manière amovible.

2. Feuille de protection de revêtement selon la revendication 1, **caractérisée en ce que** la couche de papier (2) présente un grammage de 10 g/m² à 100 g/m², en particulier de 25 g/m² à 75 g/m², de préférence de 35 g/m² à 60 g/m², et/ou que la couche de matière plastique (3) comporte du polyéthylène ou en est constituée.

3. Feuille de protection de revêtement selon la revendication 1 ou 2, **caractérisée en ce que** des cavités (7), en particulier des rainures, sont prévues entre la couche de papier (2) et la couche de matière plastique (3) et/ou que la couche de papier (2) est poreuse, en particulier microporeuse et/ou présente un revêtement poreux, en particulier microporeux.

4. Feuille de protection de revêtement selon l'une quelconque des revendications précédentes, **caractérisée en ce que**
la couche de matière plastique (3) est fermée et présente une épaisseur maximale de 30 µm, en particulier maximale de 15 µm, de préférence maximale de 10 µm.

5. Feuille de protection de revêtement selon l'une quelconque des revendications précédentes, **caractérisée en ce que**
la couche de papier (2) présente une teneur en eau de 2 à 10 % en poids, en particulier de 3 à 9 % en poids, de préférence de 4 à 8 % en poids.

6. Feuille de protection de revêtement selon l'une quelconque des revendications précédentes, **caractérisée en ce que**
la couche de papier (2) est constituée essentiellement ou entièrement de papier recyclé et/ou que la couche de papier (2) comprend une première face (4) et une seconde face opposée (5), dans laquelle la première face (4) présente une rugosité selon Bendtsen d'après la norme DIN 53108:2011-01 supérieure à la seconde face (5), en particulier dans laquelle la couche de matière plastique (3) est fixée à la seconde face.

7. Feuille de protection de revêtement selon l'une quelconque des revendications précédentes, **caractérisée en ce que**
la feuille de protection de revêtement a été obtenue conformément au procédé de fabrication selon l'une des revendications 9 ou 11.

8. Rouleau de feuille de protection de revêtement (14) avec une feuille de protection de revêtement embobinée, en particulier enroulée, selon l'une quelconque des revendications précédentes, dans lequel le rouleau de feuille de protection de revêtement comprend de préférence un mandrin (15), en particulier constitué entièrement ou essentiellement de papier, de carton et/ou de matière plastique, autour duquel la feuille de protection de revêtement est embobinée, en particulier un rouleau de feuille de protection de revêtement (14) disponible d'après le procédé de fabrication selon l'une des revendications 10 ou 11.

9. Procédé de fabrication de la feuille de protection de revêtement selon l'une des revendications 1 à 7 ou du rouleau de feuille de protection de revêtement (14) selon la revendication 8, comprenant les étapes suivantes,
a) la mise en contact de la couche de matière plastique (3) sur toute sa surface avec la couche de papier (2),
b) la génération d'une charge électrostatique sur une ou deux faces de la couche de matière plastique (3) et/ou de la couche de papier (2), en particulier avec au moins une barre d'ionisation (208), dans lequel la couche de matière plastique (3) adsorbe sur la couche de papier (2) de manière amovible moyennant la création du film de protection (1).

10. Procédé de fabrication selon la revendication 9, dans lequel celui-ci, en particulier après l'étape b), comprend l'étape suivante
c) l'enroulement de la feuille de protection de revêtement, en particulier du film de protection (1), sur un mandrin (15) moyennant la formation du rouleau de feuille de protection de revêtement (14).

11. Procédé de fabrication selon la revendication 9 ou 10, **caractérisé en ce que** la mise en contact de la couche de matière plastique (3) sur toute sa surface avec la couche de papier est réalisée dans l'étape a), du fait qu'un rouleau de couche de papier (201) et un rouleau de couche de matière plastique (202) sont déroulés, en particulier de façon synchrone, et sont réunis en un lé à deux couches au moins (205) logé entre des galets de guidage (209), dans lequel ledit lé à deux couches au moins (205) défile devant au moins ladite barre d'ionisation (208) dans l'étape b) pour constituer la feuille de protection de revêtement, laquelle est enroulée de préférence dans l'étape c) moyennant la formation du rouleau de feuille de protection de revêtement (14).

12. Utilisation de la feuille de protection de revêtement selon l'une des revendications 1 à 7 ou du rouleau de feuille de protection de revêtement (14) selon la revendication 8 comme revêtement pour au moins un élément de construction, de préférence d'un véhicule ou d'un avion, encore mieux d'une automobile (9).

13. Utilisation selon la revendication 12 comme revêtement pour au moins un élément de construction, de préférence pour un véhicule ou un avion, encore mieux pour une automobile, ou un élément de construction, qui fait partie intégrante d'un véhicule ou d'un avion, en particulier d'une automobile (9), durant la peinture, en particulier comme film pour peinture.
